# EUROPÄISCHE PATENTSCHRIFT

(11) **EP 3 164 438 B1**
(45) Veröffentlichungstag und Bekanntmachung des Hinweises auf die Patenterteilung: **17.10.2018**
(21) Anmeldenummer: 15718931.7
(22) Anmeldetag: 30.04.2015
(51) Int. Cl.: C08G 59/22, C08G 59/52, C08G 59/62, C09D 163/00

(54) **REAKTIONSPRODUKTE UND WÄSSRIGE BASISLACKE ENTHALTEND DIE REAKTIONSPRODUKTE**
REACTION PRODUCTS AND AQUEOUS BASE PAINTS CONTAINING THE REACTION PRODUCTS
PRODUITS DE RÉACTION ET APPRÊT EN BASE AQUEUSE CONTENANT LES PRODUITS DE RÉACTION

(30) Priorität: 01.07.2014 EP 14175121
(43) Veröffentlichungstag der Anmeldung: 10.05.2017
(73) Patentinhaber: BASF Coatings GmbH, 48165 Münster (DE)
(72) Erfinder: STEINMETZ, Bernhard, 97535 Rütschenhausen (DE); HOFFMANN, Peter, 48308 Senden (DE); REUTER, Hardy, 48167 Münster (DE)
(74) Vertreter: BASF IP Association
(86) Internationale Anmeldenummer: PCT/EP2015/059514
(87) Internationale Veröffentlichungsnummer: WO 2016/000848

(56) Entgegenhaltungen:
- EP-A2- 0 385 292
- EP-A2- 0 560 190
- US-A1- 2014 030 528

## Beschreibung

Die vorliegende Erfindung betrifft neuartige Reaktionsprodukte. Sie betrifft ferner wässrige Basislacke, welche die Reaktionsprodukte enthalten sowie die Verwendung der besagten Reaktionsprodukte in wässrigen Basislacken. Sie betrifft auch ein Verfahren zur Herstellung von Mehrschichtlackierungen unter Einsatz von wässrigen Basislacken sowie die mit Hilfe des besagten Verfahrens herstellbaren Mehrschichtlackierungen.

### Stand der Technik

Bekannt ist eine Vielzahl von Verfahren zur Herstellung von farb- und/oder effektgebenden mehrschichtigen Lackierungen (auch genannt Mehrschichtbeschichtungen oder Mehrschichtlackierungen). Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Die heutigen Anforderungen an die anwendungstechnologischen und ästhetischen Eigenschaften solcher Lackierungen (Beschichtungen) sind enorm.

Ein immer wieder auftretendes und vom Stand der Technik nach wie vor nicht völlig zufriedenstellend gelöstes Problem ist das Auftreten so genannter Nadelstiche, das heißt also die nicht ausreichende Stabilität gegen Nadelstiche. Bei dem aufeinanderfolgenden Aufbringen mehrerer Lacke, beispielsweise Basislack und Klarlack, und dem Verzicht der jeweils separaten Härtung der einzelnen Polymerfilme, können ungewünschte Luft-, Lösemittel- und/oder Feuchtigkeitseinschlüsse entstehen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche genannt, führen zu einem nachteilhaften optischen Erscheinungsbild. Die durch den Gesamtaufbau von Basislackschicht und Klarlackschicht anfallende Menge an organischen Lösemitteln beziehungsweise Wasser sowie die durch die Applikation eingetragene Luftmenge sind zu groß, als dass sie vollständig innerhalb eines abschließenden Härtungsschritts ohne die Erzeugung von Fehlstellen aus der Mehrschichtlackierung entweichen können. Die Eigenschaften des in diesem Zusammenhang besonders wichtigen Basislacks und der daraus hergestellten Lackschichten werden insbesondere von den im Basislack enthaltenen Bindemitteln und Additiven, beispielsweise speziellen Reaktionsprodukten, bestimmt.

Das Dokument US 2014/0030528 A1 betrifft das Problem der Nadelstiche bei pigmentierten wässrigen Lacken und deren Anwendungen als Mehrschichtlackierungen. Zur Lösung dieses Problems wird ein spezielles blockiertes Isocyanat verwendet. Hinzu kommt, dass heutzutage der Ersatz von Beschichtungsmitteln auf Basis organischer Lösemittel durch wässrige Beschichtungsmittel immer wichtiger wird, um den steigenden Anforderungen an die Umweltverträglichkeit Rechnung zu tragen.

### Aufgabe

Der vorliegenden Erfindung lag also die Aufgabe zugrunde, ein Reaktionsprodukt zur Verfügung zu stellen, mit dessen Hilfe sich Beschichtungen herstellen lassen, die die oben bezeichneten Nachteile des Standes der Technik nicht länger aufweisen. Insbesondere sollte durch die Bereitstellung eines neuen Reaktionsprodukts und dessen Einsatz in wässrigen Basislacken die Möglichkeit geschaffen werden, Beschichtungen bereitzustellen, die eine hervorragende Stabilität gegen Nadelstiche aufweisen und gleichzeitig durch den Einsatz von eben wässrigen Basislacken auf umweltschonende Weise hergestellt werden können.

### Lösung

Die genannten Aufgaben konnten durch einen pigmentierten wässrigen Basislack gelöst werden, welcher ein Reaktionsprodukt enthält, welches herstellbar ist durch Umsetzung von
(a) mindestens einer Verbindung der Formel (I)

   X₁-Y-X₂ (I)

   worin
   X₁, X₂, unabhängig voneinander, eine gegenüber Epoxidgruppen reaktive funktionelle Gruppe oder Wasserstoff ist, wobei aber mindestens eine der beiden Gruppen X₁ und X₂ eine gegenüber Epoxidgruppen reaktive funktionelle Gruppe ist, und
   Y ein divalenter aliphatischer, aromatischer oder araliphatischer Kohlenwasserstoffrest mit einem zahlenmittleren Molekulargewicht von 100 bis 2500 g/mol ist
      mit
(b) mindestens einer Verbindung der allgemeinen Strukturformel (II) 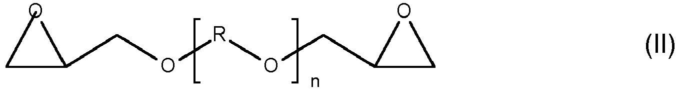 worin
   R ein C₃- bis C₆-Alkylenrest ist und n entsprechend so gewählt ist, dass die Verbindung (b) ein Epoxid-Äquivalentgewicht von 100 bis 2000 g/mol besitzt,
   wobei die Komponenten (a) und (b) bei der Umsetzung in einem molaren Verhältnis von 2,3/0,7 bis 1,7/1,6 eingesetzt werden und das resultierende Reaktionsprodukt ein zahlenmittleres Molekulargewicht von 500 bis 15000 g/mol aufweist und eine Säurezahl von kleiner 10 mg KOH/g sowie eine Hydroxylzahl von 25 bis 250 mg KOH/g besitzt.

Die Bedingung, dass n so gewählt wird, dass die besagte Verbindung (b) ein Epoxid-Äquivalentgewicht von 100 bis 2000 g/mol (Gramm Verbindung (b) pro Mol Epoxidgruppen) besitzt, sei wie folgt veranschaulicht. Eine Verbindung (b) besitzt augenscheinlich zwei Epoxidgruppen pro Molekül. Aus dem Epoxidäquivalentgewicht kann also auf das zahlenmittlere Molekulargewicht der jeweiligen Verbindung (b) rückgeschlossen werden, ohne das dieses zahlenmittlere Molekulargewicht hierfür separat gemessen werden muss. Ein Epoxid-Äquivalentgewicht von 500 g/mol wäre also mit einem daraus abgeleiteten zahlenmittleren Molekulargewicht von 1000 g/mol gleichzusetzen. Handelt es sich beispielsweise bei R um einen Tetramethylenrest und soll das so abgeleitete zahlenmittlere Molekulargewicht 1000 g/mol betragen, so liegt das so abgeleitete n im Mittel zwischen 13 und 14. Anhand der gegebenen Vorgaben weiß der Fachmann problemlos, ein entsprechendes Reaktionsprodukt herzustellen beziehungsweise auszuwählen. Die Bestimmung des Epoxid-Äquivalentgewichts erfolgt im Rahmen der vorliegenden Erfindung über potentiometrische Titration gemäß DIN EN ISO 3001. Auch wenn in dem hier geschilderten Fall als Ausgangspunkt für die Ableitung eines zahlenmittleren Molekulargewichts das gemessene Epoxid-Äquivalentgewicht herangezogen wird, schließt dies natürlich nicht aus, dass im Rahmen der vorliegenden Erfindung auch das direkt gemessene zahlenmittlere Molekulargewicht einschlägig sein kann. Dies ist, wie weiter unten angegeben, beispielsweise im Falle des zahlenmittleren Molekulargewichts der Reaktionsprodukte und der Verbindungen (a) der Fall.

Der neue Basislack wird in der Folge auch als erfindungsgemäßer Basislack bezeichnet. Bevorzugte Ausführungsformen des erfindungsgemäßen Basislacks gehen aus der folgenden Beschreibung sowie den Unteransprüchen hervor.

Ebenfalls Gegenstand der vorliegenden Erfindung ist das Reaktionsprodukt an sich sowie die Verwendung des Reaktionsprodukts in wässrigen Basislacken zur Verbesserung der Stabilität gegen Nadelstiche. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung.

Durch den Einsatz der erfindungsgemäßen Reaktionsprodukte werden Basislacke erhalten, deren Verwendung bei der Herstellung von Beschichtungen, insbesondere Mehrschichtlackierungen, zu einer hervorragenden Stabilität gegen Nadelstiche führt. Gleichzeitig wird ein hochwertiges ökologisches Profil gewahrt. Das erfindungsgemäße Reaktionsprodukt sowie der erfindungsgemäße Basislack können im Bereich der Erstlackierung, insbesondere dem Bereich der Automobilindustrie, als auch im Bereich der Automobilreparaturlackierung eingesetzt werden.

### Komponente (a)

Das erfindungsgemäße Reaktionsprodukt ist unter Einsatz mindestens einer speziellen Verbindung (a) der folgenden Formel (I) herstellbar.

X₁-Y-X₂ (I)

worin
X₁, X₂, unabhängig voneinander, eine gegenüber Epoxidgruppen reaktive funktionelle Gruppe oder Wasserstoff ist, wobei aber mindestens eine der beiden Gruppen X₁ und X₂ eine gegenüber Epoxidgruppen reaktive funktionelle Gruppe ist, und
Y ein divalenter aliphatischer, aromatischer oder araliphatischer Kohlenwasserstoffrest mit einem zahlenmittleren Molekulargewicht von 100 bis 2500 g/mol ist

Mindestens eine der beiden funktionellen Gruppen X₁ und X₂ ist gegenüber Epoxidgruppen reaktiv. Das heißt, sie reagieren unter üblich gewählten Bedingungen nach bekannten Mechanismen wie Kondensations- oder Additionsreaktionen mit Epoxidgruppen. Auf diese Weise kann dann eine Verknüpfung der Verbindung (a) mit der Verbindung (b) realisiert werden. Solche Gruppen sind dem Fachmann auf dem einschlägigen Gebiet bekannt. Möglich sind beispielsweise Carboxyl-, Hydroxyl-, Amino-, und Thiolgruppen. Bevorzugt sind Hydroxylgruppen. Bevorzugt sind die beiden Gruppen X₁ und X₂ identisch. Insbesondere sind also beide Gruppen X₁ und X₂ Hydroxylgruppen.

Der Rest Y ist ein divalenter aliphatischer, aromatischer oder araliphatischer Kohlenwasserstoffrest mit einem zahlenmittleren Molekulargewicht von 100 bis 2500 g/mol. Das zahlenmittlere Molekulargewicht wird im Rahmen der vorliegenden Erfindung, sofern nicht spezifisch anders angegeben, mittels Dampfdruckosmose bestimmt. Gemessen wurde im Rahmen der vorliegenden Erfindung mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde). Im vorliegenden Fall wird also das zahlenmittlere Molekulargewicht der Komponente (a) wie beschrieben gemessen werden und dann durch Subtraktion der Molekulargewichte der beiden funktionellen Gruppen X₁ und X₂ (vorgegeben durch die bekannten Summenformeln der Gruppen X₁ und X₂) das zahlenmittlere Molekulargewicht des Restes Y ermittelt.

Aliphatische Kohlenwasserstoffreste sind bekanntermaßen acyclische oder cyclische, gesättigte oder ungesättigte Kohlenstoffwasserstoffreste, die nicht aromatisch sind. Araliphatische Kohlenwasserstoffreste sind solche, die sowohl aliphatische als auch aromatische Struktureinheiten enthalten.

Bevorzugt weist der Rest Y ein zahlenmittleres Molekulargewicht von 150 bis 2000 g/mol, insbesondere bevorzugt von 200 bis 1000 g/mol, ganz besonders bevorzugt 200 bis 600 g/mol auf.

Eine bevorzugte Gruppe von Verbindungen (a) sind Dimerdiole beziehungsweise sind in Dimerdiolen enthalten. Dimerdiole sind seit langem bekannt und werden in der wissenschaftlichen Literatur auch als dimere Fettalkohole bezeichnet. Es handelt sich hierbei um Gemische, die beispielsweise durch Oligomerisierung von ungesättigten Fettsäuren oder deren Estern und anschließender Hydrierung der Säure- oder Estergruppen oder durch Oligomerisierung von ungesättigten Fettalkoholen hergestellt werden. Als Ausgangsstoffe können ungesättigte C₁₂- bis C₂₂-Fettsäuren oder deren Ester oder ungesättigte C₁₂- bis C₂₂-Fettalkohole eingesetzt werden.

So wird beispielsweise in der DE-11 98 348 ihre Herstellung durch Dimerisierung von ungesättigten Fettalkoholen mit basischen Erdalkalimetall-Verbindungen bei mehr als 280 °C beschrieben. Sie können auch durch Hydrierung von Dimerfettsäuren und/oder deren Estern gemäß der deutschen Auslegeschrift DE-B-17 68 313 hergestellt werden. Unter den darin beschriebenen Umständen werden nicht nur die Carboxylgruppen der Fettsäuren zu Hydroxylgruppen hydriert, sondern auch gegebenenfalls noch in den Dimerfettsäuren bzw. deren Estern enthaltene Doppelbindungen zum Teil oder vollständig hydriert. Es ist aber auch möglich, die Hydrierung so durchzuführen, dass die Doppelbindungen während der Hydrierung vollständig erhalten bleiben. In diesem Fall fallen ungesättigte Dimerdiole an. Bevorzugt wird die Hydrierung so durchgeführt, dass die Doppelbindungen möglichst vollständig hydriert werden.

Die oben genannten, zur Herstellung von Dimerdiolen einsetzbaren Dimerfettsäuren (seit langem auch bekannt als dimerisierte Fettsäuren oder Dimersäuren) sind ebenfalls wohl bekannt. Es handelt sich um entsprechende Gemische, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte C₁₂-bis C₂₂-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimerfettsäuren eingesetzten Fettsäuren, Gemische aus vornehmlich dimeren Produkten, die zwischen den Carboxylgruppen cycloaliphatische, linear-aliphatische, verzweigt aliphatische und auch C₆-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 24 bis 44 Kohlenstoffatome. Bevorzugt werden zur Herstellung Fettsäuren mit 18 Kohlenstoffatomen eingesetzt, sodass das dimere Produkt also 36 Kohlenstoffatome aufweist.

Eine andere Möglichkeit zur Herstellung von Dimerdiolen besteht in der Dimerisierung von ungesättigten Alkoholen in Gegenwart von Kieselerde/Tonerde-Katalysatoren und basischer Alkalimetallverbindungen gemäß der internationalen Anmeldung WO 91/13918.

Unabhängig von den beschriebenen Verfahren zur Herstellung der Dimerdiole werden bevorzugt solche Dimerdiole verwendet, die aus C₁₈-Fettsäuren oder deren Estern beziehungsweise C₁₈-Fettalkoholen hergestellt worden sind. Auf diese Weise entstehen überwiegend Dimerdiole mit 36 Kohlenstoffatomen.

Dimerdiole, die nach den oben genannten technischen Verfahren hergestellt worden sind, können auch wechselnde Mengen an Trimertriolen und monofunktionellen Alkoholen aufweisen. In der Regel liegt dabei der Anteil an dimeren Molekülen über 70 Gew.-% und der Rest sind trimere Moleküle und monomere Moleküle. Im Sinne der Erfindung können sowohl diese Dimerdiole eingesetzt werden als auch reinere Dimerdiole mit über 90 Gew.-% an dimeren Molekülen. Insbesondere bevorzugt werden Dimerdiole mit über 90 bis 99 Gew.-% an dimeren Molekülen, wobei hiervon solche Dimerdiole wiederum bevorzugt sind, deren Doppelbindungen und/oder aromatische Reste zumindest teilweise oder vollständig hydriert sind. Ein alternativer Ausdruck für den einschlägigen Begriff "Dimerdiole" ist also "Gemisch enthaltend Dimere herstellbar durch Dimerisierung von Fettalkoholen". Durch den Einsatz von Dimerdiolen wird also automatisch der Einsatz von Verbindungen (a) realisiert. Dies rechtfertigt auch die im Rahmen der vorliegenden Erfindung gewählte Angabe, dass Dimerdiole als Verbindung (a) eingesetzt werden. Denn Verbindungen (a), in welchen die Gruppen X₁ und X₂ Hydroxylgruppen sind, sind augenscheinlich der Hauptbestandteil der als Dimerdiole bezeichneten Gemische. Werden also Dimerdiole als Verbindungen (a) eingesetzt, ist damit gemeint, dass diese Verbindungen (a) in Form von entsprechenden Gemischen mit wie oben beschriebenen monomeren und/oder trimeren Molekülen und/oder sonstigen Nebenprodukten eingesetzt werden.

Besonders bevorzugt sind solche Dimerdiole, die sich durch Hydrierung aus Dimerfettsäuren herstellen lassen, die zu ≥ 98 Gew.-% aus dimeren Molekülen, ≤ 1,5 Gew.-% aus trimeren Molekülen und zu ≤ 0,5 Gew.-% aus monomeren Molekülen und sonstigen Nebenprodukten bestehen.

Besonders bevorzugt besitzen die Dimerdiole eine Hydroxylzahl von 170 bis 215 mg KOH/g, ganz besonders bevorzugt von 195 bis 212 mg KOH/g und insbesondere 200 bis 210 mg KOH/g. Die Bestimmungsmethode der Hydroxylzahl ist weiter unten angegeben. Besonders bevorzugt besitzen die Dimerdiole eine Viskosität von 1500 bis 5000 mPas, ganz besonders bevorzugt 1800 bis 2800 mPas (25 °C, Brookfield, ISO 2555).

Als ganz besonders bevorzugt einzusetzende Dimerdiole sind die Handelsprodukte Pripol® 2030 und insbesondere Pripol® 2033 der Firma Croda oder Sovermol® 908 der Firma BASF zu nennen.

Weitere bevorzugte Verbindungen (a) sind araliphatische Monoalkohole, solche also, die neben einer Hydroxylgruppe aromatische Struktureinheiten sowie aliphatische Struktureinheiten, umfassen. In solchen Verbindungen (a) ist also nur eine der Gruppen X₁ und X₂ eine gegenüber Epoxidgruppen reaktive funktionelle Gruppe, nämlich eine Hydroxylgruppe, während die andere Gruppe Wasserstoff ist. In diesem Sinne bevorzugte Verbindungen (a) sind Phenole, die mit mindestens einer aliphatischen Gruppe mit 2 bis 24 Kohlenstoffatomen, insbesondere 6 bis 18 Kohlenstoffatomen, subsituiert sind. Bevorzugt ist das Phenol mit genau einer aliphatischen Gruppe substituiert. Die aliphatischen Gruppen sind bevorzugt acyclische lineare oder verzweigte Gruppen. Bevorzugt sind sie verzweigt. Bevorzugte subsituierte Phenole sind Dodecylphenole wie beispielsweise 2- und/oder 4-Dodecylphenol. Hierbei handelt es also um Phenole, die einen linearen oder verzweigten, bevorzugt einen verzweigten Dodecylrest haben. In dieser Ausführungsform handelt es sich bei Y also um einen araliphatischen Rest mit einem (theoretischen) Molekulargewicht von 244 g/mol. Da ein solcher Rest keinen oligomeren oder polymeren Charakter hat (es handelt sich eben nicht um eine Mischung verschieden großer Moleküle, die aus rein statistischen Gründen immer bei einer Oligomerisierung oder Polymerisation entsteht), ist die experimentelle Bestimmung eines zahlenmittleren Molekulargewichts nicht notwendig (beziehungsweise das theoretische zahlenmittlere Molekulargewicht ist offensichtlich identisch mit dem konkreten Molekulargewicht). In diesem Zusammenhang ist auch die tatsächliche Bestimmung des Molekulargewichts über die Dampfdruckosmose, auch wenn grundsätzlich möglich, selbstverständlich nicht notwendig.

### Komponente (b)

Die Herstellung der erfindungsgemäßen Reaktionsprodukte kann unter Einsatz mindestens einer Verbindung (b) der allgemeinen Strukturformel (II) 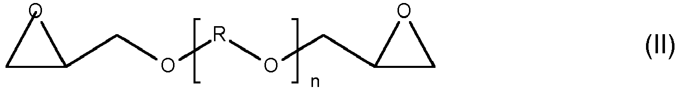 erfolgen, wobei es sich bei R um einen C₃- bis C₆-Alkylenrest handelt. Der Index n ist jeweils so zu wählen, dass besagte Verbindung (b) ein Epoxid-Äquivalentgewicht von 100 bis 2000 g/mol besitzt. Bevorzugt besitzt sie ein Epoxid-Äquivalentgewicht von 150 bis 1200 g/mol, besonders bevorzugt von 200 bis 600 g/mol und insbesondere von 250 bis 450 g/mol.

In einer erfindungsgemäß einzusetzenden Verbindung (b) können alle n Reste R gleich sein. Ebenso ist es aber auch möglich, dass unterschiedliche Arten von Resten R vorhanden sind. Bevorzugt sind alle Reste R gleich.

Bei R handelt es sich bevorzugt um C₃- oder C₄-Alkylenreste. Besonders bevorzugt handelt es sich um einen C₄-Alkylenrest, insbesondere einen Tetramethylenrest.

Entsprechende Produkte sind beispielsweise unter der Handelsbezeichnung Grilonit® (Fa. Ems Chemie) im Handel erhältlich.

### Das Reaktionsprodukt

Die Herstellung des erfindungsgemäßen Reaktionsproduktes weist keine Besonderheiten auf. Die Komponenten (a) und (b) können über allgemein bekannte Reaktionen miteinander verknüpft werden. Umgesetzt werden also die gegenüber Epoxidgruppen reaktiven funktionellen Gruppen der Komponente (a) mit den Epoxidgruppen der Komponente (b). Die Umsetzung kann beispielsweise in Masse oder in Lösung mit typischen organischen Lösemitteln bei Temperaturen von beispielsweise 50°C bis 300°C erfolgen. Selbstverständlich können auch typische Katalysatoren wie Aminkatalysatoren, insbesondere tertiäre Amine, Alkalihydroxide und -iodide , Alkali- und Erdalkalimetallfluorborate, -antimonate und -perchlorate sowie Alkali- und Erdalkali-, Zink- und Nickelsalze der Tetrafluorbor-, Tetrachlorbor-, Hexafluorantimon-, Hexachlorantimon-, Hexafluorphosphor-, Perchlor- und Periodsäure eingesetzt werden. Vorzugsweise eignen sich neben tertiären Aminen neutrale Metallsalze wie Alkali- und Erdalkali-, Zink- und Nickelperchlorate oder - fluoroborate, insbesondere bevorzugt tertiäre Amine und/oder Erdalkali- und Zinkperchlorate. Ganz besonders bevorzugt sind tertiäre Amine wie insbesondere N,N-Dimethylbenzylamin.

Das erfindungsgemäße Reaktionsprodukt hat eine Säurezahl von kleiner 10 mg KOH/g. Bevorzugt besitzt es eine Säurezahl von kleiner 7,5 mg KOH/g und ganz besonders bevorzugt von kleiner 5 mg KOH/g. Die Säurezahl wird gemäß DIN EN ISO 2114 bestimmt. Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.
Das resultierende Reaktionsprodukt besitzt ein zahlenmittleres Molekulargewicht von 500 bis 15000 g/mol, bevorzugt 750 bis 10000 g/mol, ganz besonderes bevorzugt 1000 bis 7500 g/mol und insbesondere 1200 bis 5000 g/mol. Ganz besonders bevorzugt ist ein Bereich von 1200 bis 2500 g/mol.

Das erfindungsgemäße Reaktionsprodukt ist hydroxyfunktionell und hat eine Hydroxylzahl von 25 bis 250 mg KOH/g, insbesondere 50 bis 200 mg KOH/g, ganz bevorzugt 75 bis 150 mg KOH/g. Die Bestimmung der Hydroxylzahl erfolgt im Rahmen der vorliegenden Erfindung durch potentiometrische Titration. Noch genauere Angaben werden weiter unten im Experimentalteil gemacht.

Bei der Umsetzung werden die Komponenten (a) und (b) in einem molaren Verhältnis von 2,3/0,7 bis 1,7/1,6 bevorzugt von 2,2/0,8 bis 1,8/1,6 und ganz besonders bevorzugt von 2,1/0,9 bis 1,8/1,5 eingesetzt. Ganz bevorzugt ist ein Verhältnis von genau 2/1.

Bei der Herstellung des Reaktionsprodukts werden bevorzugt alle der Epoxidgruppen der Verbindung (b) mit den entsprechenden Gruppen X₁ und X₂ umgesetzt, sodass das Reaktionsprodukt keine Epoxidgruppen enthält. Aus diesem Grund wird auch die Verbindung (a) jedenfalls im Überschuss eingesetzt. Die Tatsache, dass eine vollständige Umsetzung aller Epoxidgruppen stattgefunden hat, ist anhand des Epoxid-Äquivalentgewichts des Reaktionsprodukts nachzuvollziehen. Nimmt das Epoxid-Äquivalentgewicht einen letztlich nicht mehr messbaren, unendlich hohen Wert an, kann davon ausgegangen werden, dass alle Epoxidgruppen umgesetzt worden sind. In diesem Zusammenhang bietet sich die Angabe in Form des Epoxid-Index (EI) an, der angibt, wieviel mol Epoxidgruppen pro Kilogramm Substanz vorhanden sind. Der Epoxid-Index ergibt sich wie folgt. EI = 1000/Epoxid-Äquivalentgewicht (siehe auch DIN EN ISO 3001). Der Epoxid-Index des Reaktionsprodukts ist bevorzugt kleiner 0,01. Insbesondere bevorzugt ist er kleiner 0,001.

Aus obigem folgt, dass die oben angegebenen Bereiche des molaren Verhältnissen in dieser Breite bevorzugt nur für den Fall gelten, dass es sich bei der mindestens einen eingesetzten Verbindung (a) um eine Verbindung handelt, bei der beide Gruppen X₁ und X₂ gegenüber Epoxidgruppen reaktive funktionelle Gruppen sind. Denn in diesem Fall kann durch vollständige Umsetzung der Verbindung (a) mit der Verbindung (b) jedenfalls ein Produkt erhalten werden, in dem keine Epoxidgruppen mehr enthalten sind.

In dem Fall, in dem die Verbindung (a) nur eine gegenüber Epoxidgruppen reaktive Gruppe enthält, ist damit innerhalb der oben genannten erfindungsgemäßen Grenzen das molare Verhältnis der Verbindungen (a) zu (b) bevorzugt mindestens 2/1. Demnach liegt in diesem Fall das molare Verhältnis von Verbindung (a) zu Verbindung (b) bevorzugt von 2,3/0,7 bis 2/1, insbesondere bevorzugt von 2,2/0,8 bis 2/1, ganz bevorzugt von 2,1/0,9 bis 2/1, nochmals bevorzugt bei 2/1.

Besonders bevorzugte Ausführungsformen werden im Folgenden genannt:
a) In einer besonders bevorzugten Ausführungsform des erfindungsgemäßen Reaktionsprodukts werden als Verbindung (a) Dimerdiole (Ausführung a1)) oder araliphatische Monoalkohole (Ausführung (a2)) eingesetzt.
b) In einer weiteren besonders bevorzugten Ausführungsform des erfindungsgemäßen Reaktionsprodukts handelt es sich bei dem Rest R der Verbindung (b) um einen Tetramethylenrest und die Verbindung (b) hat ein Epoxid-Äquivalentgewicht von 200 bis 600 g/mol.
c) In einer weiteren besonders bevorzugten Ausführungsform des erfindungsgemäßen Reaktionsprodukts werden die Komponenten (a) und (b) in einem molaren Verhältnis von 2,1/0,9 bis 1,8/1,5 (Ausführung a1)) oder 2,1/0,9 bis 2/1 (Ausführung a2)) eingesetzt.
d) In einer weiteren besonders bevorzugten Ausführungsform des erfindungsgemäßen Reaktionsprodukts besitzt dieses eine Hydroxylzahl von 50 bis 200 mg KOH/g.
e) In einer weiteren besonders bevorzugten Ausführungsform des erfindungsgemäßen Reaktionsprodukts besitzt dieses ein zahlenmittleres Molekulargewicht von 1000 bis 7500 g/mol.

Als weiteres Beispiel für in diesem Sinne bevorzugte Ausführungsformen der erfindungsgemäßen Reaktionsprodukte seien jene genannt, welche alle die unter a) bis e) angegebenen Merkmale in Kombination realisieren (wobei bei den Merkmalen a) und c) jeweils die erste oder zweite Ausführungsform zu realisieren ist).

### Der pigmentierte wässrige Basislack

Die vorliegende Erfindung betrifft ferner einen pigmentierten wässrigen Basislack, welcher mindestens ein erfindungsgemäßes Reaktionsprodukt enthält. Alle oben genannten bevorzugten Ausführungsformen hinsichtlich des Reaktionsprodukts gelten selbstverständlich auch in Bezug auf den Basislack enthaltend das Reaktionsprodukt.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Möglich ist dabei insbesondere, anstatt einer Applikation auf eine Schicht eines eingebrannten Füllers den ersten Basislack direkt auf ein mit einer gehärteten Elektrotauschlackschicht versehenes Metallsubstrat zu applizieren und den zweiten Basislack direkt auf die erste Basislackschicht zu applizieren, ohne das letztere separat gehärtet wird. Um eine Basislackschicht beziehungsweise die oberste Basislackschicht insbesondere gegen Umwelteinflüsse zu schützen, wird auf dieser mindestens noch eine zusätzliche Klarlackschicht appliziert. Dies erfolgt in der Regel im nass-in-nass-Verfahren, das heißt der Klarlack wird appliziert, ohne dass die Basislackschicht gehärtet wird. Die Härtung erfolgt dann abschließend gemeinsam. Verbreitet ist inzwischen auch, nur eine Basislackschicht auf einer gehärteten Elektrotauschlackschicht herzustellen, dann einen Klarlack zu applizieren und diese beiden Schichten dann gemeinsam zu härten.

Die Summe über die gewichtsprozentualen Anteile, bezogen auf das Gesamtgewicht des pigmentierten wässrigen Basislacks, aller erfindungsgemäßen Reaktionsprodukte beträgt bevorzugt 0,1 bis 30 Gew.-%, besonders bevorzugt 1 bis 20 Gew.-% und ganz besonders bevorzugt 1,5 bis 15 Gew.-% oder sogar 2 bis 12 Gew.-%.

Liegt der Gehalt des erfindungsgemäßen Reaktionsprodukts unter 0,1 Gew.-% so ist es gegebenenfalls möglich, dass keine Verbesserung Stabilität gegen Nadelstiche mehr erzielt wird. Liegt der Gehalt bei mehr als 30 Gew.-% so können unter Umständen Nachteile auftreten, wie zum Beispiel eine Inkompatibilität des besagten Reaktionsprodukts im Basislack. Eine solche Inkompatibilität kann sich beispielsweise durch ungleichmäßigen Verlauf sowie durch Ausschwimmen oder Absetzen zeigen.

Im Falle einer möglichen Spezifizierung auf Basislacke enthaltend bevorzugte Reaktionsprodukte in einem speziellen Anteilsbereich gilt folgendes. Die Reaktionsprodukte, die nicht in die bevorzugte Gruppe fallen, können selbstverständlich weiterhin im Basislack enthalten sein. Der spezielle Anteilsbereich gilt dann nur für die bevorzugte Gruppe von Reaktionsprodukten. Bevorzugt ist allerdings, dass für den Gesamtanteil von Reaktionsprodukten bestehend aus Reaktionsprodukten aus der bevorzugten Gruppe und Reaktionsprodukten, die nicht in die bevorzugte Gruppe fallen, ebenfalls der spezielle Anteilsbereich gilt.

Würde also eine Beschränkung auf einen Anteilsbereich von 1,5 bis 15 Gew.-% und eine bevorzugte Gruppe von Reaktionsprodukten durchgeführt werden, so gilt dieser Anteilsbereich augenscheinlich zunächst nur für die bevorzugte Gruppe an Reaktionsprodukten. Bevorzugt wäre dann aber, dass insgesamt von allen ursprünglich umfassten Reaktionsprodukten bestehend aus Reaktionsprodukten aus der bevorzugten Gruppe und Reaktionsprodukten, die nicht in die bevorzugte Gruppe fallen, ebenfalls von 1,5 bis 15 Gew.-% enthalten sind. Werden also 5 Gew.-% von Reaktionsprodukten der bevorzugten Gruppe eingesetzt, so können höchstens 10 Gew.-% der Reaktionsprodukte der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die Pigmente, die Polyurethanharze als Bindemittel oder auch die Vernetzungsmittel wie Melaminharze.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das erfindungsgemäße Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Neben dem erfindungsgemäßen Reaktionsprodukt enthalten die erfindungsgemäßen pigmentierten wässrigen Basislacke besonders bevorzugt mindestens ein Polyurethanharz als Bindemittel. Derartige Polyurethanharze enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert. Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch oder thermisch und mit aktinischer Strahlung, also mittels "Dual Cure", härtbar sind.

Als thermisch härtende Basislacke sind solche bevorzugt, die als Bindemittel ein Polyurethanharz, bevorzugt ein hydroxygruppenhaltiges Polyurethanharz, und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanat, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar.

Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung) und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Die Summe über die gewichtsprozentualen Anteile, bezogen auf das Gesamtgewicht des pigmentierten wässrigen Basislacks, aller Polyurethanharze beträgt bevorzugt 2 bis 40 Gew.-%, besonders bevorzugt 2,5 bis 30 Gew.-% und ganz besonders bevorzugt 3 bis 20 Gew.-%.

Der einzusetzende pigmentierte wässrige Basislack kann zudem mindestens einen von den erfindungsgemäßen Reaktionsprodukten verschiedenen Polyester, insbesondere einen Polyester mit einem zahlenmittleren Molekulargewicht von 400 bis 5000 g/mol als Bindemittel enthalten. Entsprechende Polyester werden beispielsweise in DE 4009858 in Spalte 6, Zeile 53 bis Spalte 7, Zeile 61 und Spalte 10, Zeile 24 bis Spalte 13, Zeile 3 beschrieben.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil, Feststoffgehalt) ist derjenige Gewichtsanteil zu verstehen, der unter festgelegten Bedingungen beim Eindampfen als Rückstand verbleibt. In der vorliegenden Anmeldung wird der Festkörper, sofern nicht explizit anders angegeben, nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein pigmentierter wässriger Basislack eingesetzt wird, welcher mindestens ein erfindungsgemäßes Reaktionsprodukt enthält. Alle vorstehend genannten Ausführungen hinsichtlich des erfindungsgemäßen Reaktionsprodukts und des pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wir dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf wie oben beschriebene mit gehärteten Elektrotauchlackierungen und/oder Füllern vorbeschichtete Metallsubstrate kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

In einer besonderen Ausführungsform umfasst das Verfahren zur Herstellung einer mehrschichtigen Lackierung die folgenden Schritte:
Herstellung einer gehärteten Elektrotauchlackschicht auf dem metallischen Substrat durch elektrophoretisches Aufbringen eines Elektrotauchlacks auf das Substrat und anschließende Härtung des Elektrotauchlacks,

Herstellung (i) einer Basislackschicht oder (ii) mehrerer direkt aufeinander folgender Basislackschichten direkt auf der gehärteten Elektrotauchlackschicht durch (i) Aufbringen eines wässrigen Basislacks direkt auf die Elektrotauchlackschicht oder (ii) direkt aufeinanderfolgendes Aufbringen von mehreren Basislacken auf die Elektrotauchlackschicht,
Herstellung einer Klarlackschicht direkt auf (i) der Basislackschicht oder (ii) der obersten Basislackschicht durch Aufbringen eines Klarlacks direkt auf (i) die eine Basislackschicht oder (ii) die oberste Basislackschicht,
wobei (i) der eine Basislack oder (ii) mindestens einer der Basislacke ein erfindungsgemäßer Basislack ist,
gemeinsame Härtung der Basislackschicht (i) oder der Basislackschichten (ii) sowie der Klarlackschicht.

In der letztgenannten Ausführungsform wird also im Vergleich zu den oben beschriebenen Standardverfahren auf die Applikation und separate Härtung eines gängigen Füllers verzichtet. Stattdessen werden alle auf die Elektrotauchlackschicht applizierten Schichten gemeinsam gehärtet, wodurch der Gesamtprozess deutlich ökonomischer gestaltet wird. Trotzdem gelingt auf diese Weise und insbesondere durch den Einsatz eines erfindungsgemäßen Basislacks enthaltend ein erfindungsgemäßes Reaktionsprodukt der Aufbau von Mehrschichtlackierungen, die kaum Nadelstiche aufweisen und damit optisch besonders herausragend sind. Dies ist insbesondere deshalb überraschend, als dass bei diesem Verfahren innerhalb des abschließenden Härtungsschritts eine besonders große Menge organischer Lösemittel beziehungsweise Wasser aus dem System entweichen muss (da eben keine separate Härtung einer Füllerschicht realisiert wird), wodurch die grundsätzliche Anfälligkeit für die Erzeugung von Nadelstichen stark ansteigt.

Das Aufbringen eines Beschichtungsmittels direkt auf ein Substrat beziehungsweise direkt auf eine zuvor hergestellte Beschichtungsschicht versteht sich wie folgt. Das jeweilige Beschichtungsmittel wird so aufgebracht, dass die daraus hergestellte Beschichtungsschicht auf dem Substrat (der anderen Beschichtungsschicht) angeordnet ist und in direktem Kontakt mit dem Substrat (der anderen Beschichtungsschicht) steht. Zwischen Beschichtungsschicht und Substrat (anderer Beschichtungsschicht) ist also insbesondere keine andere Schicht angeordnet. Ohne die Angabe direkt ist die aufgebrachte Beschichtungsschicht zwar auf dem Substrat (der anderen Schicht) angeordnet, es muss aber nicht zwingend ein direkter Kontakt vorhanden sein. Insbesondere können weitere Schichten dazwischen angeordnet sein. Im Rahmen der vorliegenden Erfindung gilt also folgendes. Ist keine Spezifizierung von direkt angegeben, so ist augenscheinlich keine Beschränkung auf direkt gegeben.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken. Ferner werden in diesem Zusammenhang bevorzugt Basislacke eingesetzt, welche als Bindemittel ein Polyurethanharz aber keinen Vernetzer enthalten.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen Reaktionsprodukts und des pigmentierten wässrigen Basislacks gelten entsprechend auch für die besagte Mehrschichtlackierung sowie für das erfindungsgemäße Verfahren. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll.

Das erfindungsgemäße Verfahren eignet sich demnach zur Ausbesserung von Fehlstellen auf Mehrschichtlackierungen (Reparatur). Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.
Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des erfindungsgemäßen Polymers und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung ab- oder angeschliffen werden, nicht aber die in der Regel darunter angeordnete Füllerschicht und Grundierungsschicht abgeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Im Rahmen der Ausbesserung von Fehlstellen auf Mehrschichtlackierungen, das heißt also, wenn das Substrat eine Fehlstellen aufweisende Originallackierung darstellt, bevorzugt eine erfindungsgemäße Fehlstellen aufweisende Mehrschichtlackierung, wird bevorzugt das Niedrigtemperatureinbrennen angewendet.

Ein weiterer Aspekt der vorliegenden Erfindung ist die Verwendung des erfindungsgemäßen Reaktionsprodukts in pigmentierten wässrigen Basislacken zur Verbesserung der Stabilität gegen optische Fehlstellen, insbesondere Nadelstiche.

Die Qualität der Stabilität gegen Nadelstiche kann grundsätzlich anhand der Nadelstichgrenze sowie der Anzahl von Nadelstichen bestimmt werden. Die Nadelstichgrenze und deren Bestimmung können wie folgt beschrieben werden: Beim Aufbau einer Mehrschichtlackierung wird die Schichtdicke einer unterhalb der Klarlackschicht angeordneten Basislackschicht, die zudem nicht separat, sondern zusammen mit der Klarlackschicht eingebrannt wird, variiert. Bei dieser Beschichtungsschicht kann es sich beispielsweise um eine direkt auf der Elektrotauchlackschicht angeordnete Schicht und/oder eine direkt unterhalb der Klarlackschicht angeordnete Schicht handeln. Aus dem einleitend Ausgeführten folgt, dass die Tendenz zur Bildung von Nadelstichen mit der Vergrößerung der Schichtdicke dieser Schicht zunehmen muss, da entsprechend höhere Mengen an Luft, organischen Lösemitteln und/oder Wasser aus der Schicht entweichen müssen. Die Schichtdicke dieser Schicht, ab welcher Nadelstiche zu erkennen sind, wird als Nadelstichgrenze bezeichnet. Je höher die Nadelstichgrenze ist, desto besser ist augenscheinlich die Qualität der Stabilität gegen Nadelstiche. Auch die Anzahl von Nadelstichen ist selbstverständlich Ausdruck der Qualität der Stabilität gegen Nadelstiche.

Im Folgenden wird die Erfindung anhand von Beispielen erläutert.

### Beispiele

### Spezifizierung bestimmter eingesetzter Komponenten und Messmethoden

### Polyester 1 (P1):

Hergestellt entsprechend Beispiel D, Spalte 16, Z. 37 bis 59 der DE 4009858 A, wobei als organisches Lösemittel Butylglykol anstatt Butanol verwendet wurde, das heißt als Lösemittel Butylglykol und Wasser enthalten sind. Die entsprechende Dispersion des Polyesters hat einen Festkörpergehalt von 60 Gew.-%.

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin allerdings Benzil als Eichsubstanz eingesetzt wurde).

### Bestimmung der Hydroxylzahl:

Die Hydroxylzahl wurde in Anlehnung an R.-P. Krüger, R. Gnauck und R. Algeier, Plaste und Kautschuk, 20, 274 (1982) mittels Essigsäureanhydrid in Gegenwart von 4-Dimethylaminopyridin als Katalysator in einer Tetrahydrofuran (THF) / Dimethylformamid (DMF)-Lösung bei Raumtemperatur (20°C) ermittelt, wobei der verbliebene Überschuss an Essigsäureanhydrid nach Acetylierung vollständig hydrolysiert wurde und die Essigsäure mit alkoholischer Kaliumhydroxid-Lösung potentiometrisch zurücktitriert wurde. Acetylierungszeiten von 60 min reichten in allen Fällen aus, um einen vollständigen Umsatz zu garantieren.

### Bestimmung der Säurezahl:

Die Säurezahl wurde in Anlehnung an die DIN EN ISO 2114 in homogener Lösung aus THF / Wasser (9 Vol.-Teile THF und 1 Vol.-Teil destilliertes Wasser) mit ethanolischer Kaliumhydroxid-Lösung bestimmt.

### Bestimmung des Epoxid-Äquivalentgewichts:

Die Bestimmung erfolgte gemäß DIN EN ISO 3001.

### Bestimmung des Feststoffgehalts:

Die Bestimmung erfolgte gemäß DIN EN ISO 3251 bei 130°C; 60 Minuten, Einwaage 1,0 g.

### Herstellung erfindungsgemäßer Reaktionsprodukte (ER):

### ER1:

In einem 4 l Edelstahlreaktor, ausgestattet mit Ankerrührer, Thermometer und Kühler wurden 810,0 g Polytetrahydrofurandiglycidylether (Grilonit F 713, Fa. Ems Chemie) mit einem Epoxid-Equivalentgewicht von 405 g/eq und 1100 g Dimerdiol (Pripol® 2033, Fa. Croda) mit einer Hydroxyl-Zahl von 204 mg KOH/g (2,0 mol) ohne Lösungsmittel vorgelegt und auf 125°C aufgeheizt. Das Epoxid-Äquivalentgewicht einer daraus entnommenen Probe wurde nach DIN EN ISO 3001 mit 955 g/mol bestimmt. Nach Erreichen der 125°C wurden 5,4 g N.N-Dimethylbenzylamin (Fa. BASF SE) zugegeben und 12 Stunden bei 125°C gehalten, bis keine Epoxid-Gruppen mehr nachweisbar waren. Man erhielt nach Abkühlen bei Raumtemperatur ein zähflüssiges Harz.
Zahlenmittleres Molekulargewicht (Harz): 1804 g/mol
Feststoffgehalt: 99,9 %
Epoxid-Äquivalentgewicht in g/mol: unendlich
Säurezahl: 0,0 mg KOH/g
Hydroxylzahl: 118 mg KOH/g Feststoffgehalt
Viskosität (original): 602 mPas,
(gemessen bei 23°C mit einem Rotationsviskosimeter der Fa. Brookfield, Typ CAP 2000+, Spindel 3, Scherrate: 5000 s⁻¹).

### ER2:

In einem 4 I Edelstahlreaktor, ausgestattet mit Ankerrührer, Thermometer und Kühler wurden 810,0 g Polytetrahydrofurandiglycidylether (Grilonit F 713, Fa. Ems Chemie) mit einem Epoxid-Equivalentgewicht von 405 g/eq und 524,8 g Dodecylphenol (Dodecylphenol T, Fa. Sasol) mit einer Hydroxyl-Zahl von 214 mg KOH/g (2,0 mol) ohne Lösungsmittel vorgelegt und auf 125°C aufgeheizt. Das Epoxid-Equivalentgewicht einer daraus entnommenen Probe wurde nach DIN EN ISO 3001 mit 669 g/mol bestimmt. Nach Erreichen der 125°C wurden 5,4 g N,N-Dimethylbenzylamin (Fa. BASF SE) zugegeben und 12 Stunden bei 125°C gehalten, bis keine Epoxid-Gruppen mehr nachweisbar waren. Man erhielt nach Abkühlen bei Raumtemperatur ein zähflüssiges Harz.
Zahlenmittleres Molekulargewicht (Harz): 1300 g/mol
Feststoffgehalt: 99,8 %
Epoxid-Äquivalentgewicht in g/mol: unendlich
Säurezahl: 0,0 mg KOH/g
Hydroxylzahl: 84 mg KOH/g Feststoffgehalt
Viskosität (original): 750 mPas,
(gemessen bei 23°C mit einem Rotationsviskosimeter der Fa. Brookfield, Typ CAP 2000+, Spindel 3, Scherrate: 5000 s⁻¹).

### Herstellung von wässrigen Basislacken

### Herstellung eines silbernen Vergleich-Wasserbasislacks 1 (V1)

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A:**

| Komponente | Gewichtsteile |
|---|---|
| **Wässrige Phase** | |
| 3%ige Na-Mg-Schichtsilikatlösung | 26 |
| Deionisiertes Wasser | 13,6 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung Rheovis PU 1250 (BASF), Rheologiemittel | 0,6 |
| P1 | 3,2 |
| TMDD (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A, Festkörpergehalt mit deionisiertem Wasser auf 32,5 Gew.-% eingestellt | 20,4 |
| TMDD (BASF) | 1,6 |
| 3 Gew.-%ige wässrige Rheovis AS S130 Lösung; Rheologiemittel, erhältlich von BASF | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| P1 | 5 |

### Herstellung von erfindungsgemäßen Wasserbasislacken 1 und 2 (E1 und E2)

Zur Herstellung des erfindungsgemäßen Wasserbasislacks E1 wurde ein Lack analog der Herstellung des Vergleichs-Wasserbasislacks 1 (V1) hergestellt, wobei anstelle des Polyesters P1 sowohl in der wässrigen Phase als auch in der organischen Phase ER1 eingesetzt wurde. ER1 wurde dabei als 100 %-ige Substanz (bezogen auf Festkörper) eingesetzt. Bezogen auf den Festkörperanteil (nichtflüchtigen Anteil) wurde in E1 dieselbe Menge ER1 eingesetzt, wie in V1 der Polyester P1 eingesetzt wurde. Die durch den unterschiedlichen Festkörper von ER1 und der Dispersion P1 bedingten unterschiedlichen Mengen an Butylglykol wurden in der Formulierung E1 durch entsprechenden Zusatz von Butylglykol ausgeglichen. Für die Herstellung des Wasserbasislacks E2 wurde analog E1 vorgegangen, wobei anstelle von ER1 das Reaktionsprodukt ER2 eingesetzt wurde.

Tabelle 1 zeigt nochmals die in den Wasserbasislacken (WBL) V1 und E1 sowie E2 eingesetzten Polyester und Reaktionsprodukte sowie deren Anteile (bezogen auf die Gesamtmenge der Wasserbasislacke) als Übersicht.

**Tabelle 1: Zusammensetzungen der WBL V1 und E1 bis E2**

| **WBL** | **[Gew.-%]** | **Reaktionsprodukt** |
|---|---|---|
| V1 | 4,92 | P1 |
| E1 | 4,92 | ER1 |
| E2 | 4,92 | ER2 |

### Vergleich zwischen den Wasserbasislacken V1 und E1 sowie E2

Zur Bestimmung der Nadelstichgrenze und der Nadelstichanzahl wurden Mehrschichtlackierungen nach der folgenden allgemeinen Vorschrift hergestellt:
Ein mit einer KTL beschichtetes Stahlblech der Abmessungen 30 x 50 cm wurde an einer Längskante mit einem Klebstreifen versehen, um nach der Beschichtung die Schichtdickendifferenzen ermitteln zu können. Der jeweilige Wasserbasislack wurde keilförmig elektrostatisch appliziert. Die resultierende Wasserbasislackschicht wurde während 4 Minuten bei Raumtemperatur abgelüftet und anschließend während 10 Minuten im Umluftofen bei 70°C zwischengetrocknet. Auf die getrocknete Wasserbasislackschicht wurde ein üblicher Zweikomponentenklarlack in einer Schichtdicke von 35 Mikrometern elektrostatisch appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze und die Anzahl an Nadelstichen ab dieser Schichtdicke (das heißt die Gesamtanzahl an Nadelstichen auf dem lackierten Blech) bestimmt. Die Ergebnisse finden sich in der Tabelle 2.

**Tabelle 2: Nadelstichgrenze und Nadelstichanzahl von Mehrschichtlackierungen, die unter Einsatz der Wasserbasislacke V1 und E1 sowie E2 hergestellt wurden**

| **WBL** | **Nadelstichgrenze (Mikrometer)** | **Nadelstichanzahl** |
|---|---|---|
| V1 | 22 | 25 |
| E1 | 28 | 2 |
| E2 | 26 | 5 |

Die Ergebnisse untermauern, dass der Einsatz der erfindungsgemäßen Reaktionsprodukte beziehungsweise der erfindungsgemäßen Wasserbasislacke die Nadelstichgrenze im Vergleich zum Vergleichs-Wasserbasislack V1 deutlich erhöht und gleichzeitig die Nadelstichanzahl vermindert.

### Herstellung eines silbernen Vergleich-Wasserbasislacks 2 (V2)

Die in der Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B:**

| Komponente | Gewichtsteile |
|---|---|
| **Wässrige Phase** | |
| 3%ige Na-Mg-Schichtsilikatlösung | 26 |
| Deionisiertes Wasser | 21,7 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung Rheovis PU 1250 (BASF), Rheologiemittel | 0,6 |
| P1 | 13,3 |
| TMDD (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A, Festkörpergehalt mit deionisiertem Wasser auf 32,5 Gew.-% eingestellt | 1,8 |
| TMDD (BASF) | 1,6 |
| 3 Gew.-%ige wässrige Rheovis AS S130 Lösung; Rheologiemittel, erhältlich von BASF | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| P1 | 5 |

### Herstellung eines erfindungsgemäßen Wasserbasislacks 3 (E3)

Analog der Herstellung von E1 und E2 wurde auf Basis des Vergleichsbasislacks V2 (Tabelle B) unter Ersatz der Polyesterdispersion P1 ein erfindungsgemäßer Basislack E3 (enthaltend ER1) hergestellt. Der Ausgleich der unterschiedlichen Festkörper in Bezug auf die Polyesterdispersion P1 erfolgte wiederum durch entsprechenden Zusatz von Butylglykol.

**Tabelle 3: Zusammensetzungen der WBL V2 und E3**

| **WBL** | **[Gew.-%]** | **Reaktionsprodukt** |
|---|---|---|
| V2 | 10,98 | P1 |
| E3 | 10,98 | ER1 |

### Vergleich zwischen den Wasserbasislacken V2 und E3

Wie oben für die Mehrschichtlackierungen, die unter Einsatz der Wasserbasislacke V1 und E1 bis E2 hergestellt wurden, wurden Mehrschichtlackierungen unter Einsatz der Wasserbasislacke V2 und E3 hergestellt. Auch die Auswertung hinsichtlich der Nadelstichgrenze und Nadelstichanzahl erfolgte analog. Die Ergebnisse finden sich in der Tabelle 4.

**Tabelle 4: Nadelstichgrenze und Nadelstichanzahl von Mehrschichtlackierungen, die unter Einsatz der Wasserbasislacke V2 und E3 hergestellt wurden**

| **WBL** | **Nadelstichgrenze (Mikrometer)** | **Nadelstichanzahl** |
|---|---|---|
| V2 | 14 | 63 |
| E3 | 27 | 9 |

Die Ergebnisse untermauern wiederum, dass der Einsatz der erfindungsgemäßen Reaktionsprodukte beziehungsweise der erfindungsgemäßen Wasserbasislacke die Nadelstichgrenze im Vergleich zum Vergleichs-Wasserbasislack V2 deutlich erhöht und gleichzeitig die Nadelstichanzahl vermindert.

## Patentansprüche

1. Pigmentierter wässriger Basislack enthaltend ein Reaktionsprodukt, welches herstellbar ist durch Umsetzung von
(a) mindestens einer Verbindung der Formel (I)
X₁-Y-X₂ (I)
worin
X₁, X₂, unabhängig voneinander, eine gegenüber Epoxidgruppen reaktive funktionelle Gruppe oder Wasserstoff ist, wobei aber mindestens eine der beiden Gruppen X₁ und X₂ eine gegenüber Epoxidgruppen reaktive funktionelle Gruppe ist, und
Y ein divalenter aliphatischer, aromatischer oder araliphatischer Kohlenwasserstoffrest mit einem zahlenmittleren Molekulargewicht von 100 bis 2500 g/mol, bestimmt wie in der Beschreibung angegeben, ist mit
(b) mindestens einer Verbindung der allgemeinen Strukturformel (II) 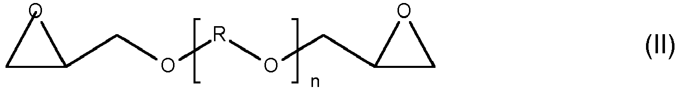 worin
R ein C₃- bis C₆-Alkylenrest ist und n entsprechend so gewählt ist, dass die Verbindung (b) ein Epoxid-Äquivalentgewicht von 100 bis 2000 g/mol besitzt,
wobei die Komponenten (a) und (b) bei der Umsetzung in einem molaren Verhältnis von 2,3/0,7 bis 1,7/1,6 eingesetzt werden und das resultierende Reaktionsprodukt ein zahlenmittleres Molekulargewicht von 500 bis 15000 g/mol, bestimmt wie in der Beschreibung angegeben, aufweist und eine Säurezahl von kleiner 10 mg KOH/g sowie eine Hydroxylzahl von 25 bis 250 mg KOH/g, bestimmt wie in der Beschreibung angegeben, besitzt.

2. Basislack nach Anspruch 1, **dadurch gekennzeichnet, dass** die Verbindung (b) ein Epoxid-Äquivalentgewicht von 150 bis 1200 g/mol besitzt.

3. Basislack nach Anspruch 1 oder 2, **dadurch gekennzeichnet, dass** es sich bei der Gruppe R gemäß der allgemeinen Strukturformel (II) um Tetramethylenreste handelt.

4. Basislack nach einem der Ansprüche 1 bis 3, **dadurch gekennzeichnet, dass** das Reaktionsprodukt ein zahlenmittleres Molekulargewicht von 750 bis 10000 g/mol besitzt.

5. Basislack nach einem der Ansprüche 1 bis 4, **dadurch gekennzeichnet, dass** als Verbindung (a) Dimerdiole eingesetzt werden.

6. Basislack nach Anspruch 5, **dadurch gekennzeichnet, dass** die Komponenten (a) und (b) bei der Umsetzung in einem molaren Verhältnis von 2,1/0,9 bis 1,8/1,5 umgesetzt werden.

7. Basislack nach einem der Ansprüche 1 bis 4, **dadurch gekennzeichnet, dass** als Verbindung (a) araliphatische Monoalkohole, bevorzugt Dodecylphenole, eingesetzt werden.

8. Basislack nach Anspruch 7, **dadurch gekennzeichnet, dass** die Komponenten (a) und (b) bei der Umsetzung in einem molaren Verhältnis von 2,1/0,9 bis 2/1 umgesetzt werden.

9. Pigmentierter wässriger Basislack gemäß einem der Ansprüche 1 bis 8, **dadurch gekennzeichnet, dass** die Summe über die gewichtsprozentualen Anteile, bezogen auf das Gesamtgewicht des pigmentierten wässrigen Basislacks, aller Reaktionsprodukte 0,1 bis 30 Gew.-% beträgt.

10. Pigmentierter wässriger Basislack nach einem der Ansprüche 1 bis 9, **dadurch gekennzeichnet, dass** er ein mittels olefinisch ungesättigten Monomeren gepfropftes Polyurethanharz, welches zudem Hydroxylgruppen enthält, sowie ein Melaminharz umfasst.

11. Reaktionsprodukt, herstellbar durch Umsetzung von
(a) mindestens einer Verbindung der Formel (I)
X₁-Y-X₂ (I)
worin
X₁, X₂, unabhängig voneinander, eine gegenüber Epoxidgruppen reaktive funktionelle Gruppe oder Wasserstoff ist, wobei aber mindestens eine der beiden Gruppen X₁ und X₂ eine gegenüber Epoxidgruppen reaktive funktionelle Gruppe ist, und
Y ein divalenter aliphatischer, aromatischer oder araliphatischer Kohlenwasserstoffrest mit einem zahlenmittleren Molekulargewicht von 100 bis 2500 g/mol ist
mit
(b) mindestens einer Verbindung der allgemeinen Strukturformel (II) 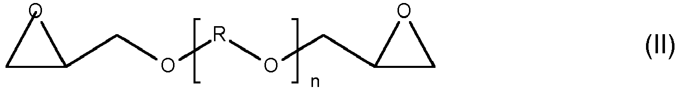 worin
R ein C₃- bis C₆-Alkylenrest ist und n entsprechend so gewählt ist, dass die Verbindung (b) ein Epoxid-Äquivalentgewicht von 100 bis 2000 g/mol besitzt,
wobei die Komponenten (a) und (b) bei der Umsetzung in einem molaren Verhältnis von 2,3/0,7 bis 1,7/1,6 eingesetzt werden und das resultierende Reaktionsprodukt ein zahlenmittleres Molekulargewicht von 500 bis 15000 g/mol aufweist und eine Säurezahl von kleiner 10 mg KOH/g sowie eine Hydroxylzahl von 25 bis 250 mg KOH/g besitzt.

12. Verwendung eines Reaktionsprodukts gemäß Anspruch 11 in einem pigmentierten wässrigen Basislack zur Verbesserung der Stabilität gegen optische Fehlstellen in Lackierungen, welche unter Einsatz des Basislacks hergestellt werden.

13. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß einem der Ansprüche 1 bis 10 eingesetzt wird.

14. Verfahren nach Anspruch 13, **dadurch gekennzeichnet, dass** das Substrat ein mit einer gehärteten Elektrotauchlackschicht beschichtetes metallisches Substrat ist und alle auf die Elektrotauchlackschicht applizierten Schichten gemeinsam gehärtet werden.

15. Mehrschichtlackierung, herstellbar nach dem Verfahren gemäß Anspruch 13 oder 14.

## Claims

1. Pigmented aqueous basecoat material comprising a reaction product which is preparable by reaction of
(a) at least one compound of the formula (I)
X₁- Y - X₂ (I)
in which
X₁, X₂, independently of one another, are each a functional group which is reactive toward epoxide groups, or hydrogen, with, however, at least one of the two groups X₁ and X₂ being a functional group which is reactive toward epoxide groups, and
Y is a divalent aliphatic, aromatic or araliphatic hydrocarbon radical having a number-average molecular weight of 100 to 2500 g/mol, determined as specified in the description,
with
(b) at least one compound of the general structural formula (II) 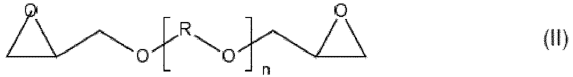 in which
R is a C₃ to C₆ alkylene radical and n is selected accordingly such that the compound (b) possesses an epoxide equivalent weight of 100 to 2000 g/mol,
where components (a) and (b) are used in the reaction in a molar ratio of 2.3/0.7 to 1.7/1.6 and the resulting reaction product possesses a number-average molecular weight of 500 to 15 000 g/mol, determined as specified in the description, and an acid number of less than 10 mg KOH/g and also a hydroxyl number of 25 to 250 mg KOH/g, determined as specified in the description.

2. Basecoat material according to Claim 1, **characterized in that** the compound (b) possesses an epoxide equivalent weight of 150 to 1200 g/mol.

3. Basecoat material according to Claim 1 or 2, **characterized in that** the group R in the general structural formula (II) comprises tetramethylene radicals.

4. Basecoat material according to any of Claims 1 to 3, **characterized in that** the reaction product possesses a number-average molecular weight of 750 to 10 000 g/mol.

5. Basecoat material according to any of Claims 1 to 4, **characterized in that** dimer diols are used as compound (a) .

6. Basecoat material according to Claim 5, **characterized in that** in the reaction components (a) and (b) are reacted in a molar ratio of 2.1/0.9 to 1.8/1.5.

7. Basecoat material according to any of Claims 1 to 4, **characterized in that** araliphatic monoalcohols, preferably dodecylphenols, are used as compound (a).

8. Basecoat material according to Claim 7, **characterized in that** in the reaction components (a) and (b) are reacted in a molar ratio of 2.1/0.9 to 2/1.

9. Pigmented aqueous basecoat material according to any of Claims 1 to 8, **characterized in that** the sum total of the weight-percentage fractions, based on the total weight of the pigmented aqueous basecoat material, of all the reaction products is 0.1 to 30 wt%.

10. Pigmented aqueous basecoat material according to any of Claims 1 to 9, **characterized in that** it comprises a polyurethane resin that is grafted by means of olefinically unsaturated monomers and that also comprises hydroxyl groups, and a melamine resin.

11. Reaction product preparable by reaction of
(a) at least one compound of the formula (I)
X₁ - Y - X₂ (I)
in which
X₁, X₂, independently of one another, are each a functional group which is reactive toward epoxide groups, or hydrogen, with, however, at least one of the two groups X₁ and X₂ being a functional group which is reactive toward epoxide groups, and
Y is a divalent aliphatic, aromatic or araliphatic hydrocarbon radical having a number-average molecular weight of 100 to 2500 g/mol,
with
(b) at least one compound of the general structural formula (II) 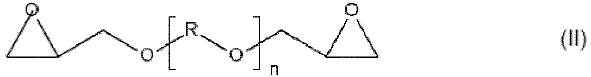 in which
R is a C₃ to C₆ alkylene radical and n is selected accordingly such that the compound (b) possesses an epoxide equivalent weight of 100 to 2000 g/mol,
where components (a) and (b) are used in the reaction in a molar ratio of 2.3/0.7 to 1.7/1.6 and the resulting reaction product possesses a number-average molecular weight of 500 to 15 000 g/mol and an acid number of less than 10 mg KOH/g and also a hydroxyl number of 25 to 250 mg KOH/g.

12. Use of a reaction product according to Claim 11 in a pigmented aqueous basecoat material for improving the stability with respect to optical defects in paint systems produced using the basecoat material.

13. Method for producing a multicoat paint system, where
(1) a pigmented aqueous basecoat material is applied to a substrate,
(2) a polymer film is formed from the coating material applied in stage (1),
(3) a clearcoat material is applied to the resulting basecoat film, and then
(4) the basecoat film is cured together with the clearcoat film,
**characterized in that** a pigmented aqueous basecoat material according to any of Claims 1 to 10 is used in stage (1).

14. Method according to Claim 13, **characterized in that** the substrate is a metallic substrate coated with a cured electrocoat film, and all of the films applied to the electrocoat film are cured jointly.

15. Multicoat paint system producible by the method according to Claim 13 or 14.

## Revendications

1. Vernis de base aqueux pigmenté contenant un produit de réaction qui peut être fabriqué par réaction de (a) au moins un composé de formule (I)
X₁-Y-X₂ (I)
dans laquelle
X₁, X₂, indépendamment l'un de l'autre, sont un groupe fonctionnel réactif vis-à-vis de groupes époxy, ou de l'hydrogène, mais au moins l'un des deux groupes X₁ et X₂ étant un groupe fonctionnel réactif vis-à-vis des groupes époxy et
Y est un radical hydrocarboné divalent, aliphatique, aromatique ou araliphatique, ayant un poids moléculaire moyen en nombre de 100 à 2500 g/mol, déterminé comme indiqué dans la description,
avec
(b) au moins un composé de formule structurale générale (II) 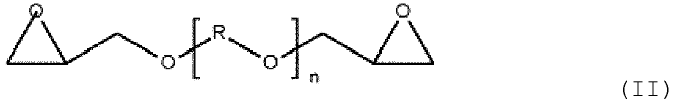 dans laquelle
R est un radical alkylène en C₃ à C₆ et n est choisi de telle sorte que le composé (b) présente un poids équivalent en époxy de 100 à 2 000 g/mol,
les composants (a) et (b) étant utilisés lors de la réaction en un rapport molaire de 2,3/0,7 à 1,7/1,6, et le produit de réaction résultant présentant un poids moléculaire moyen en nombre de 500 à 15 000 g/mol, déterminé comme indiqué dans la description, et présentant un indice d'acidité inférieur à 10 mg KOH/g ainsi qu'un indice d'hydroxyle de 25 à 250 mg KOH/g, déterminé comme indiqué dans la description.

2. Vernis de base selon la revendication 1, **caractérisé en ce que** le composé (b) présente un poids équivalent en époxy de 150 à 1200 g/mol.

3. Vernis de base selon la revendication 1 ou 2, **caractérisé en ce que** le groupe R selon la formule structurale générale (II) est constitué par des radicaux tétraméthylène.

4. Vernis de base selon l'une quelconque des revendications 1 à 3, **caractérisé en ce que** le produit de réaction présente un poids moléculaire moyen en nombre de 750 à 10 000 g/mol.

5. Vernis de base selon l'une quelconque des revendications 1 à 4, **caractérisé en ce que** l'on utilise en tant que composé (a) des dimerdiols.

6. Vernis de base selon la revendication 5, **caractérisé en ce que** les composants (a) et (b), lors de la réaction, sont mis à réagir en un rapport molaire de 2,1/0,9 à 1,8/1,5.

7. Vernis de base selon l'une quelconque des revendications 1 à 4, **caractérisé en ce que** l'on utilise en tant que composé (a) des monoalcools araliphatiques, de préférence des dodécylphénols.

8. Vernis de base selon la revendication 7, **caractérisé en ce que** les composants (a) et (b), lors de la réaction, sont mis à réagir en un rapport molaire de 2,1/0,9 à 2/1.

9. Vernis de base aqueux pigmenté selon l'une quelconque des revendications 1 à 8, **caractérisé en ce que** la somme des proportions en pourcentage en poids, par rapport au poids total du vernis de base aqueux pigmenté, de tous les produits de réaction, est de 0,1 à 30 % en poids.

10. Vernis de base aqueux pigmenté selon l'une quelconque des revendications 1 à 9, **caractérisé en ce qu'**il comprend une résine de polyuréthane greffée au moyen de monomères oléfiniquement insaturés, qui contient en outre des groupes hydroxyle, ainsi qu'une résine de mélamine.

11. Produit de réaction, pouvant être fabriqué par réaction de
(a) au moins un composé de formule (I)
X₁-Y-X₂ (I)
dans laquelle
X₁, X₂, indépendamment l'un de l'autre, sont un groupe fonctionnel réactif vis-à-vis des groupes époxy, ou de l'hydrogène, mais au moins l'un des deux groupes X₁ et X₂ étant un groupe fonctionnel réactif vis-à-vis des groupes époxy et
Y est un radical hydrocarboné divalent, aliphatique, aromatique ou araliphatique, ayant un poids moléculaire moyen en nombre de 100 à 2500 g/mol,
avec
(b) au moins un composé de formule structurale générale (II) 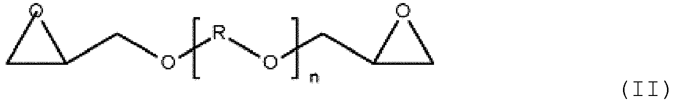 dans laquelle
R est un radical alkylène en C₃ à C₆ et n est choisi de telle sorte que le composé (b) présente un poids équivalent en époxy de 100 à 2 000 g/mol,
les composants (a) et (b) étant utilisés lors de la réaction en un rapport molaire de 2,3/0,7 à 1,7/1,6, et le produit de réaction résultant présentant un poids moléculaire moyen en nombre de 500 à 15 000 g/mol et présentant un indice d'acidité inférieur à 10 mg KOH/g ainsi qu'un indice d'hydroxyle de 25 à 250 mg KOH/g.

12. Utilisation d'un produit de réaction selon la revendication 11 dans un vernis de base aqueux pigmenté pour améliorer la stabilité vis-à-vis des défauts optiques dans des vernissages, qui sont fabriqués en utilisant le vernis de base.

13. Procédé de fabrication d'un vernissage multicouche, dans lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue et ensuite
(4) la couche de vernis de base est durcie conjointement avec la couche de vernis transparent,
**caractérisé en ce qu'**à l'étape (1), un vernis de base aqueux pigmenté selon l'une quelconque des revendications 1 à 10 est utilisé.

14. Procédé selon la revendication 13, **caractérisé en ce que** le substrat est un substrat métallique revêtu d'une couche de vernis pour électrodéposition durcie et toutes les couches appliquées sur la couche de vernis pour électrodéposition sont durcies ensemble.

15. Vernissage multicouche, pouvant être fabriqué par le procédé selon la revendication 13 ou 14.
